# EUROPEAN PATENT APPLICATION

(11) **EP 4 122 938 A1**
(43) Date of publication of application: **25.01.2023**
(21) Application number: 21772621.5
(22) Date of filing: 05.03.2021
(51) Int. Cl.: C07F 7/00, C08F 4/6592

(54) **PRODUCTION METHOD FOR TRANSITION METAL COMPOUND**

(30) Priority: 17.03.2020 KR 20200032573
(71) Applicant: Hanwha Solutions Corporation, Jung-gu Seoul 04541 (KR)
(72) Inventor: PARK, Ranwha, Daejeon 34128 (KR); PARK, Seongyeon, Daejeon 34128 (KR); LEE, Won Jong, Daejeon 34128 (KR); JEONG, Wook, Daejeon 34128 (KR); JEONG, Taeho, Daejeon 34128 (KR)
(74) Representative: HGF
(86) International application number: PCT/KR2021/002733
(87) International publication number: WO 2021/187780

(57) **Abstract**

The present invention relates to a process for preparing a transition metal compound. Specifically, the present invention relates to a process for preparing a transition metal compound having a non-bridged, asymmetric biscyclopentadienyl group that can be used in the preparation of a catalyst for olefin polymerization. The process for preparing a transition metal compound according to an embodiment of the present invention is capable of conveniently preparing a transition metal compound having a non-bridged, asymmetric biscyclopentadienyl group.

## Description

### Technical Field

The present invention relates to a process for preparing a transition metal compound. Specifically, the present invention relates to a process for preparing a transition metal compound having a non-bridged, asymmetric biscyclopentadienyl (bisCp) group that can be used in the preparation of a catalyst for olefin polymerization.

### Background Art

Polyolefin-based polymers are widely used in real life as materials for shopping bags, greenhouses, fishing nets, cigarette packages, instant noodle packages, yogurt bottles, battery cases, automobile bumpers, interior parts, shoe soles, washing machines, and the like.

Conventionally, polyolefin-based polymers such as polyethylene, polypropylene, and ethylene-alpha olefin copolymers and their copolymers have been prepared using a heterogeneous catalyst such as a Ziegler-Natta catalyst made of a titanium compound and an alkyl aluminum compound.

In recent years, a method for preparing polyolefin using a metallocene catalyst, which is a homogeneous catalyst with a very high catalytic activity, has been studied. A metallocene catalyst is a compound in which a ligand such as cyclopentadienyl, indenyl, and cycloheptadienyl is coordinated to a transition metal or a transition metal halide compound. It has a sandwich structure in its basic form. Here, it has various molecular structures depending on the type of ligand and the type of core metal.

In a Ziegler-Natta catalyst as a heterogeneous catalyst, the metal component serving as the active sites is dispersed on an inert solid surface, whereby the properties of the active sites are not uniform. On the other hand, since a metallocene catalyst is a single compound having a specific structure, it is known as a single-site catalyst in which all active sites have the same polymerization characteristics.

In general, since a metallocene catalyst has no activity as a polymerization catalyst by itself, it is used together with a cocatalyst such as methyl aluminoxane. The metallocene catalyst is activated as a cation by the action of the cocatalyst. At the same time, the cocatalyst as an anion that is not coordinated with the metallocene catalyst stabilizes the unsaturated cationic active species to form a catalyst system having activity in the polymerization of various olefins.

Such a metallocene catalyst has advantages in that copolymerization is readily carried out, the three-dimensional structure of a polymer can be controlled according to the symmetry of the catalyst, and the polymer prepared thereby has a narrow molecular weight distribution with uniform distribution of a comonomer.

A transition metal compound having a non-bridged, asymmetric biscyclopentadienyl group, which is one of the transition metal compounds used in the preparation of such a metallocene catalyst, is prepared through rather complicated steps.

For example, a transition metal compound having a non-bridged, asymmetric biscyclopentadienyl group is prepared in a rather complicated process in which pentamethylcyclopentadienyltrimethylsilane is used as a starting material to synthesize a metal source in the form of pentamethylcyclopentadienylzirconium trichloride; and a cyclopentadienyl group substituted in another form is introduced thereto (see Journal of Organometallic Chemistry, 340 (1988) 37-40).

This conventional manufacturing method has disadvantages in that the manufacturing process is complicated and a lot of by-products are formed.

### Detailed Description of the Invention

### Technical Problem

An object of the present invention is to provide a process for preparing a transition metal compound having a non-bridged, asymmetric biscyclopentadienyl (bisCp) group in a simpler method.

### Technical Solution

According to an embodiment of the present invention to accomplish the above object, there is provided a process for preparing a transition metal compound represented by Formula 1, which comprises (1) dissolving any one of a compound represented by Formula 2 and a compound represented by Formula 3, which are different from each other, in a solvent; (2) adding a compound represented by Formula 4 to the solution obtained in step (1) and reacting it under stirring; and (3) adding the other one of the compound represented by Formula 2 and the compound represented by Formula 3 to the solution obtained in step (2) and reacting it under stirring.

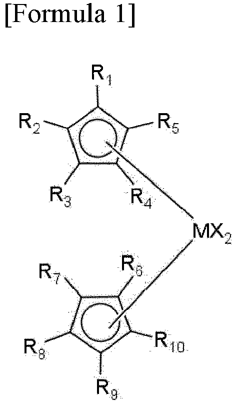

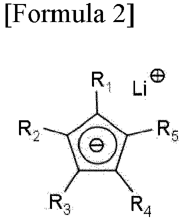

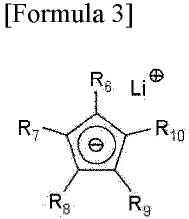

[Formula 4] MX₄

In Formulae 1 to 4, M is each titanium (Ti), zirconium (Zr), or hafnium (Hf), X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido,

R₁ to R₅ and R₆ to R₁₀ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl, and

R₁ to R₅ and R₆ to R₁₀ are each independently capable of being linked to adjacent groups to form a substituted or unsubstituted, saturated or unsaturated C₄₋₂₀ ring.

Specifically, in Formulae 1 to 4, M may be zirconium or hafnium, X may each be halogen or substituted or unsubstituted C₁₋₂₀ alkyl, R₁ to R₅ and R₆ to R₁₀ may each be hydrogen, substituted or unsubstituted C₂₋₂₀ alkyl, substituted or unsubstituted C₁₋₂₀ alkenyl, or substituted or unsubstituted C₆₋₂₀ aryl.

Preferably, the compound represented by Formula 1 may be at least one of the transition metal compounds represented by Formulae 1-1 to 1-24.

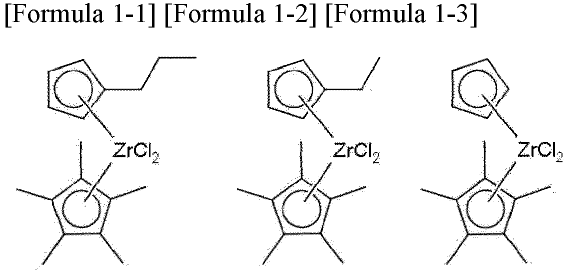

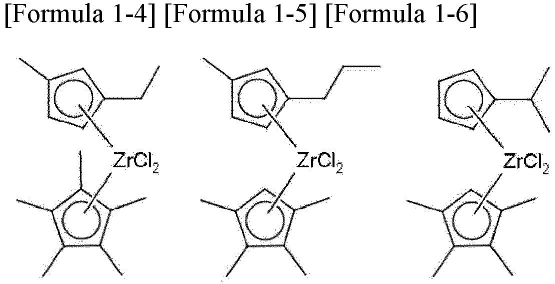

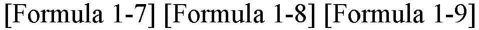

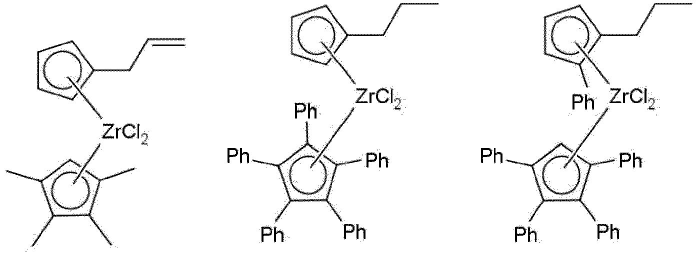

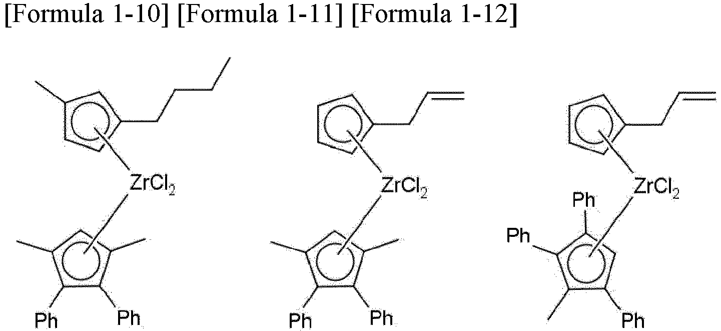

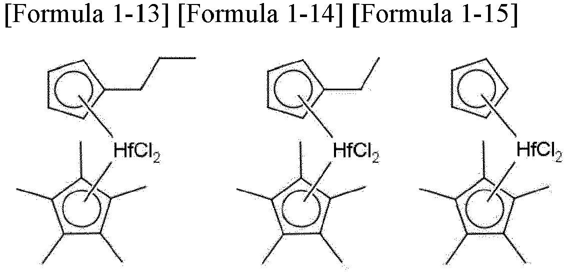

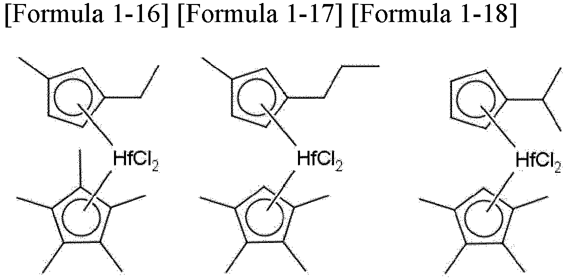

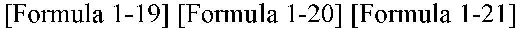

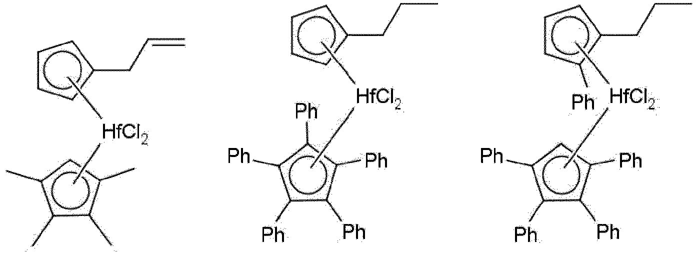

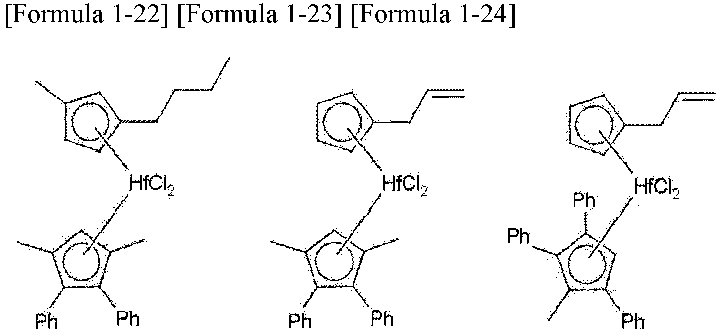

Preferably, the compound represented by Formula 2 may be at least one of the compounds represented by Formulae 2-1 to 2-6.

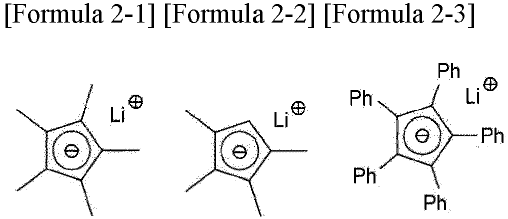

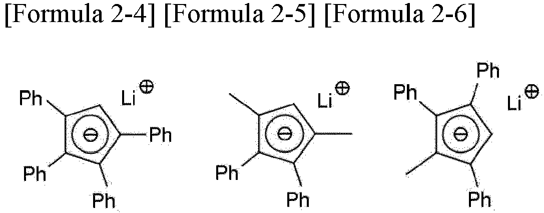

In addition, the compound represented by Formula 3 may be at least one of the compounds represented by Formulae 3-1 to 3-9.

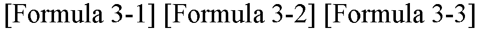

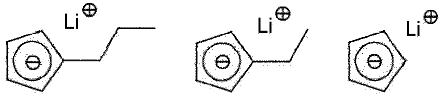

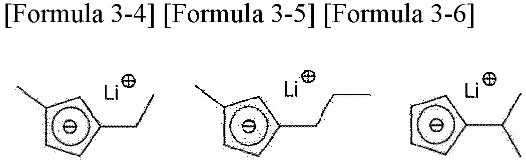

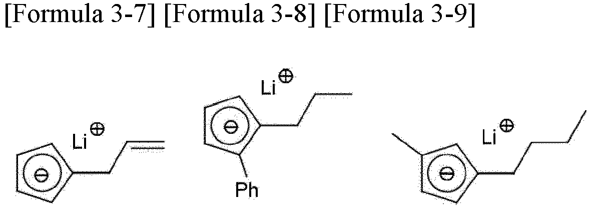

Here, the solvent may comprise at least one selected from the group consisting of hexane, pentane, toluene, benzene, dichloromethane, diethyl ether, tetrahydrofuran, acetone, and ethyl acetate.

Preferably, the compound represented by Formula 4 is ZrCl₄ or HfCl₄.

Preferably, in step (2), the reaction temperature is -30°C to 120°C, and the reaction time is 1 to 24 hours.

In addition, in step (3), the reaction temperature is -30°C to 80°C, and the reaction time is 1 to 24 hours.

Preferably, the compound represented by Formula 2 may be used in step (1), and the compound represented by Formula 3 may be used in step (3).

In addition, the molar ratio of the compound represented by Formula 2 to the compound represented by Formula 3 is in the range of 10:1 to 1:10.

The preparation process according to an embodiment of the present invention may further comprise (4) removing unreacted substances and/or impurities from the reaction mixture obtained in step (3) with a filter.

### Advantageous Effects of the Invention

The process for preparing a transition metal compound according to an embodiment of the present invention is capable of conveniently preparing a transition metal compound having a non-bridged, asymmetric biscyclopentadienyl group.

### Best Mode for Carrying Out the Invention

Hereinafter, the present invention will be described in more detail.

According to an embodiment of the present invention, there is provided a process for preparing a transition metal compound represented by Formula 1, which comprises (1) dissolving any one of a compound represented by Formula 2 and a compound represented by Formula 3, which are different from each other, in a solvent; (2) adding a compound represented by Formula 4 to the solution obtained in step (1) and reacting it under stirring; and (3) adding the other one of the compound represented by Formula 2 and the compound represented by Formula 3 to the solution obtained in step (2) and reacting it under stirring.

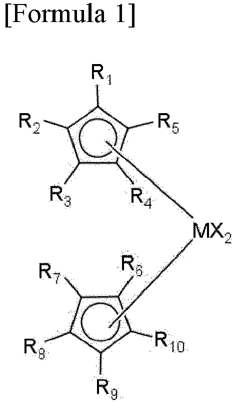

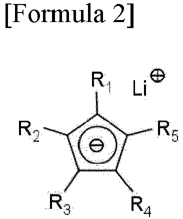

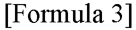

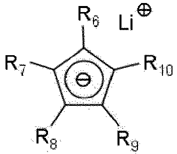

[Formula 4] MX₄

In Formulae 1 to 4, M is titanium (Ti), zirconium (Zr), or hafnium (Hf). Specifically, M may be zirconium or hafnium.

X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido. Specifically, X may each be halogen or substituted or unsubstituted C₁₋₂₀ alkyl. More specifically, X may each be chlorine.

R₁ to R₅ and R₆ to R₁₀ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, or substituted or unsubstituted C₁₋₂₀ silyl. Here, R₁ to R₅ and R₆ to R₁₀ are each independently capable of being linked to adjacent groups to form a substituted or unsubstituted saturated or unsaturated C₄₋₂₀ ring. Specifically, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl,

In a preferred specific embodiment of the present invention, in Formulae 1 to 4, M may be zirconium or hafnium, X may each be halogen or substituted or unsubstituted C₁₋₂₀ alkyl, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

Preferably, the compound represented by Formula 1 prepared by the preparation process according to the present invention may be at least one of the transition metal compounds represented by Formulae 1-1 to 1-24.

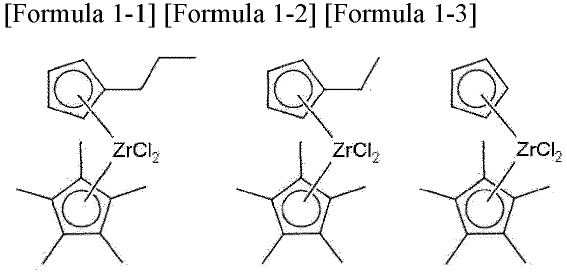

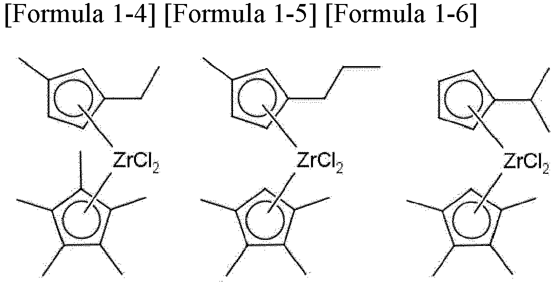

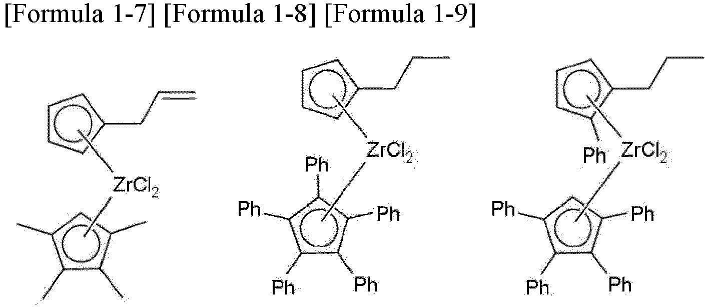

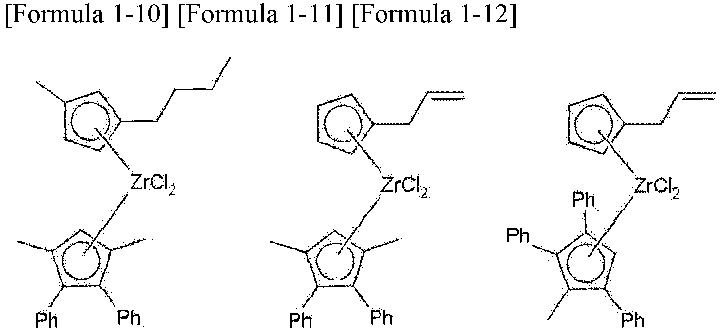

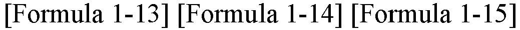

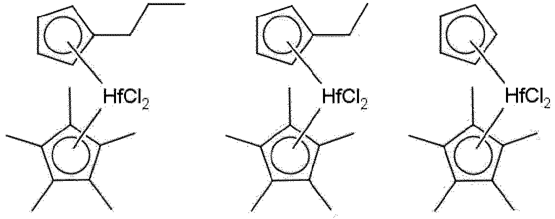

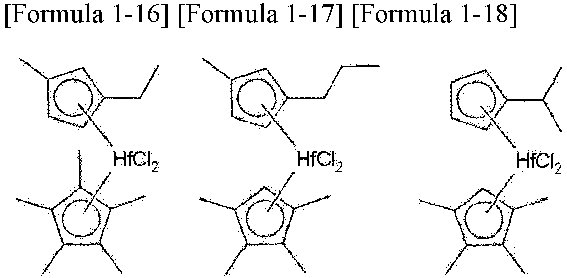

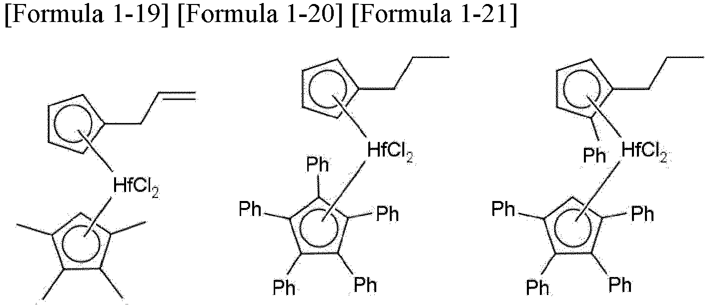

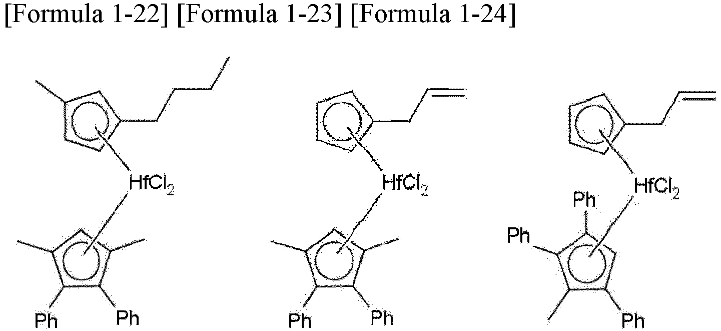

### Step (1)

Specifically, in step (1), any one of a compound represented by Formula 2 and a compound represented by Formula 3, which are different from each other, is dissolved in a solvent.

Preferably, the compound represented by Formula 2 may be at least one of the compounds represented by Formulae 2-1 to 2-6.

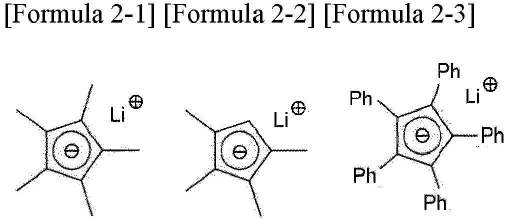

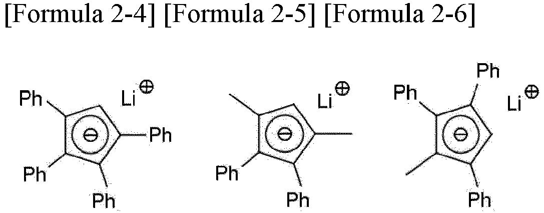

In addition, the compound represented by Formula 3 may be at least one of the compounds represented by Formulae 3-1 to 3-9.

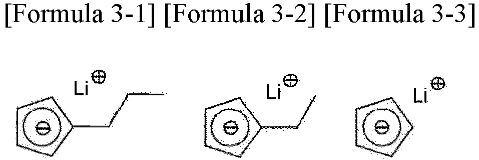

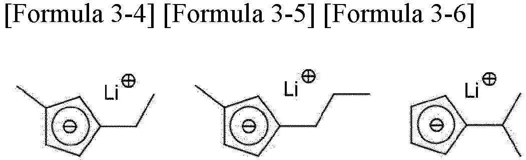

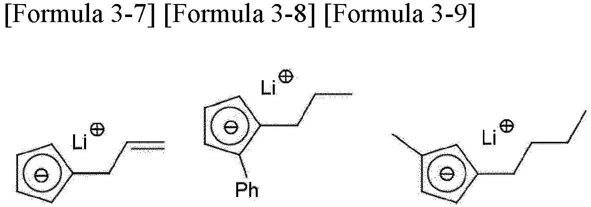

Here, the solvent may comprise at least one selected from the group consisting of aliphatic hydrocarbon solvents such as hexane and pentane, aromatic hydrocarbon solvents such as toluene and benzene, hydrocarbon solvents substituted with chlorine atoms such as dichloromethane, ether-based solvents such as diethyl ether and tetrahydrofuran, acetone, and ethyl acetate. Preferably, the solvent may be toluene, but it is not particularly limited thereto.

When any one of the compound represented by Formula 2 and the compound represented by Formula 3 is dissolved in a solvent, the temperature and dissolution time are not particularly limited. For example, any one of the compound represented by Formula 2 is added to a solvent at a temperature of -78°C to 30°C, preferably a temperature of - 40°C to 10°C, more preferably a temperature of about -30°C and stirred to be dissolved for 10 minutes to 17 hours, preferably 20 minutes to 10 hours, more preferably about 1 hour.

### Step (2)

In step (2), a compound represented by Formula 4 is added to the solution obtained in step (1), which is reacted under stirring.

Preferably, the compound represented by Formula 4 is ZrCl₄ or HfCl₄.

The temperature at which the compound represented by Formula 4 is added is preferably in the range of -78°C to 30°C. More preferably, the temperature at which the compound represented by Formula 4 is added may be in the range of -40°C to 30°C. Most preferably, the temperature at which the compound represented by Formula 4 is added may be room temperature.

Once the compound represented by Formula 4 has been added, the temperature is gradually raised to a range of -30°C to 120°C, more preferably 0°C to 80°C, and most preferably room temperature to 60°C, and it is stirred for 1 to 24 hours, preferably 5 to 20 hours, and more preferably about 17 hours to carry out the reaction.

### Step (3)

In step (3), the other one of the compound represented by Formula 2 and the compound represented by Formula 3 is added to the solution obtained in step (2), which is reacted under stirring.

The temperature at which the other one of the compound represented by Formula 2 and the compound represented by Formula 3 is added is preferably in the range of -78°C to 30°C. More preferably, the temperature at which the other one of the compound represented by Formula 2 and the compound represented by Formula 3 is added may be in the range of -40°C to 30°C. Most preferably, the temperature at which the other one of the compound represented by Formula 2 and the compound represented by Formula 3 is added may be room temperature.

Once the other one of the compound represented by Formula 2 and the compound represented by Formula 3 has been added, the temperature is gradually raised to a range of -30°C to 80°C, more preferably 0°C to 60°C, and most preferably room temperature, and it is stirred for 1 to 24 hours, preferably 1 to 10 hours, and more preferably about 4 hours to carry out the reaction.

In the preparation process according to a preferred embodiment of the present invention, the compound represented by Formula 2 may be used in step (1), and the compound represented by Formula 3 may be used in step (3).

In addition, the molar ratio of the compound represented by Formula 2 to the compound represented by Formula 3 is in the range of 10:1 to 1:10. Preferably, the molar ratio of these two compounds is 5:1 to 1:5. More preferably, the molar ratio of these two compounds is 1.2:1 to 1:1.2.

### Step (4)

The preparation process according to an embodiment of the present invention may further comprise (4) removing unreacted substances and/or impurities from the reaction mixture obtained in step (3) with a filter.

The filter for removing unreacted substances and/or impurities is not particularly limited, but a Celite filter is preferably used.

### Embodiments for Carrying Out the Invention

### Example

Hereinafter, the present invention will be described in detail with reference to Examples. However, the following examples are intended to further illustrate the present invention. The scope of the present invention is not limited thereto only.

### Example 1

100 mg (0.70 mmole, 1.2 eq.) of lithium pentamethylcyclopentadienide of Formula 2-1 was dissolved in 20 ml of toluene at -30°C. While it was slowly stirred, 137 mg (0.59 mmole, 1.0 eq.) of zirconium chloride (ZrCl₄) was added thereto. It was then stirred at 60°C for 17 hours. The temperature of the reaction mixture was lowered to room temperature, and 67 mg (0.59 mmole, 1.0 eq.) of lithium n-propylcyclopentadienide of Formula 3-1 was then added. It was reacted under stirring at room temperature for 4 hours. Lithium chloride (LiCl) was removed with a Celite filter, and the product was dried to obtain 208 mg (yield: 72%) of the compound of Formula 1-1 ((pentamethylcyclopentadienyl)(n-propylcyclopentadienyl) zirconium dichloride).

The structure of the compound of Formula 1-1 was confirmed by ¹H NMR.

¹H-NMR (CDCl₃, 300 MHz): 6.03-6.01 (m, 2H), 5.95-5.93 (m, 2H), 2.58 (t, 2H), 2.02 (s, 15H), 1. 62-1.51 (m, 2H), 0.92 (t, 3H).

### Example 2

135 mg (0.95 mmole, 1.2 eq.) of lithium pentamethylcyclopentadienide of Formula 2-1 was dissolved in 20 ml of toluene at -30°C. While it was slowly stirred, 253 mg (0.79 mmole, 1.0 eq.) of hafnium chloride (HfCl₄) was added thereto. It was then stirred at 60°C for 17 hours. The temperature of the reaction mixture was lowered to room temperature, and 180 mg (0.79 mmole, 1.0 eq.) of lithium n-propylcyclopentadienide of Formula 3-1 was then added. It was reacted under stirring at room temperature for 4 hours. Lithium chloride (LiCl) was removed with a Celite filter, and the product was dried to obtain 227 mg (yield: 58%) of the compound of Formula 1-13 ((pentamethylcyclopentadienyl)(n-propylcyclopentadienyl) hafnium dichloride).

The structure of the compound of Formula 1-13 was confirmed by ¹H NMR.

¹H-NMR (CDCl₃, 300 MHz): 5.95-5.92 (m, 2H), 5.89-5.86 (m, 2H), 2.60 (t, 2H), 2.07 (s, 15H), 1. 60-1.51 (m, 2H), 0.92 (t, 3H).

The process for preparing a transition metal compound according to an embodiment of the present invention is capable of conveniently preparing a transition metal compound having a non-bridged, asymmetric biscyclopentadienyl group. In addition, the transition metal compound prepared by the process for preparing a transition metal compound according to an embodiment of the present invention may be used for preparing a catalyst for olefin polymerization.

### Industrial Applicability

The process for preparing a transition metal compound according to an embodiment of the present invention is capable of conveniently preparing a transition metal compound having a non-bridged, asymmetric biscyclopentadienyl group.

## Claims

1. A process for preparing a transition metal compound represented by Formula 1, which comprises (1) dissolving any one of a compound represented by Formula 2 and a compound represented by Formula 3, which are different from each other, in a solvent; (2) adding a compound represented by Formula 4 to the solution obtained in step (1) and reacting it under stirring; and (3) adding the other one of the compound represented by Formula 2 and the compound represented by Formula 3 to the solution obtained in step (2) and reacting it under stirring: 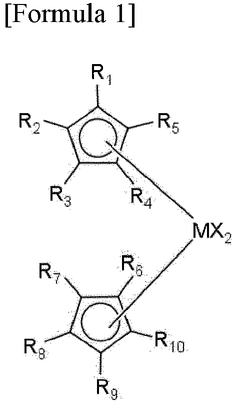 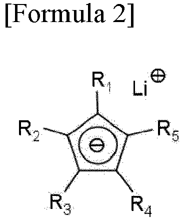 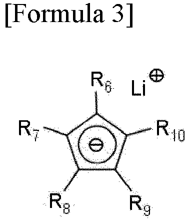 [Formula 4] MX₄
in Formulae 1 to 4, M is each titanium (Ti), zirconium (Zr), or hafnium (Hf),
X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, or C₆₋₂₀ arylamido,
R₁ to R₅ and R₆ to R₁₀ are each independently hydrogen, substituted or
unsubstituted C₁₋₂₀ alkyl, substituted or unsubstituted C₂₋₂₀ alkenyl, substituted or
unsubstituted C₆₋₂₀ aryl, substituted or unsubstituted C₁₋₂₀ alkyl C₆₋₂₀ aryl, substituted or
unsubstituted C₆₋₂₀ aryl C₁₋₂₀ alkyl, substituted or unsubstituted C₁₋₂₀ heteroalkyl,
substituted or unsubstituted C₃₋₂₀ heteroaryl, substituted or unsubstituted C₁₋₂₀ alkylamido,
substituted or unsubstituted C₆₋₂₀ arylamido, or substituted or unsubstituted C₁₋₂₀ silyl, and
R₁ to R₅ and R₆ to R₁₀ are each independently capable of being linked to adjacent groups to form a substituted or unsubstituted, saturated or unsaturated C₄₋₂₀ ring.

2. The process for preparing a transition metal compound of claim 1, wherein, in Formulae 1 to 3, M is zirconium or hafnium, X is each halogen or substituted or unsubstituted C₁₋₂₀ alkyl, R₁ to R₅ and R₆ to R₁₀ are each hydrogen, substituted or unsubstituted C₁₋₂₀ alkyl, substituted or unsubstituted C₁₋₂₀ alkenyl, or substituted or unsubstituted C₆₋₂₀ aryl.

3. The process for preparing a transition metal compound of claim 1, wherein the compound represented by Formula 1 is at least one of the compounds represented by Formulae 1-1 to 1-24:

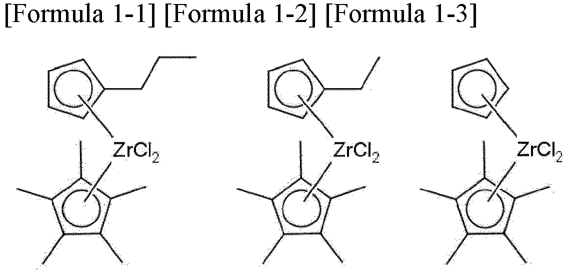

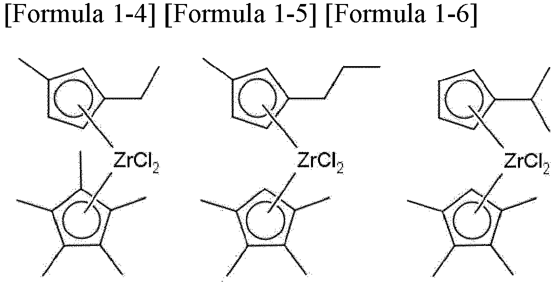

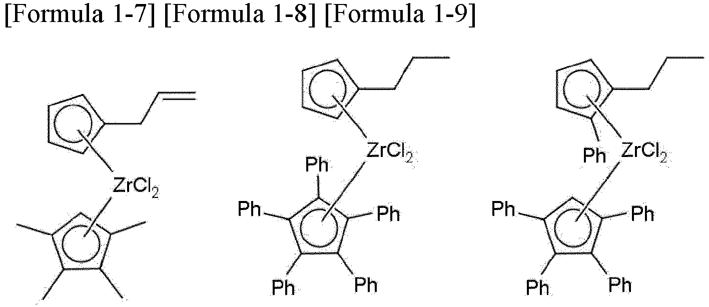

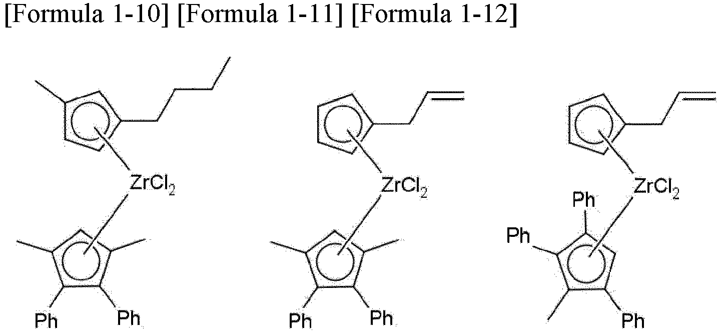

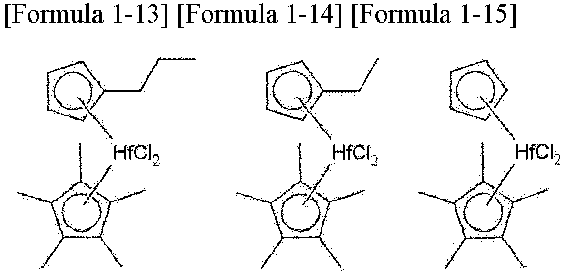

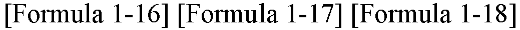

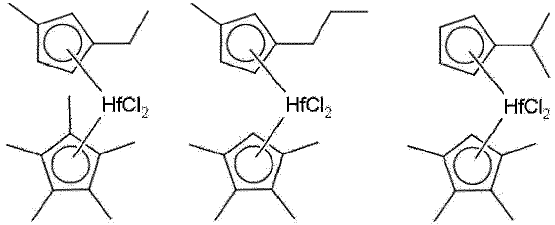

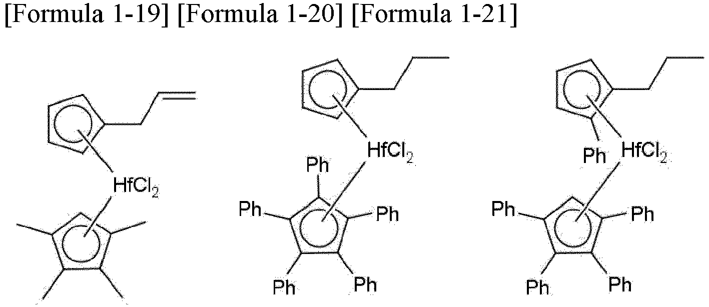

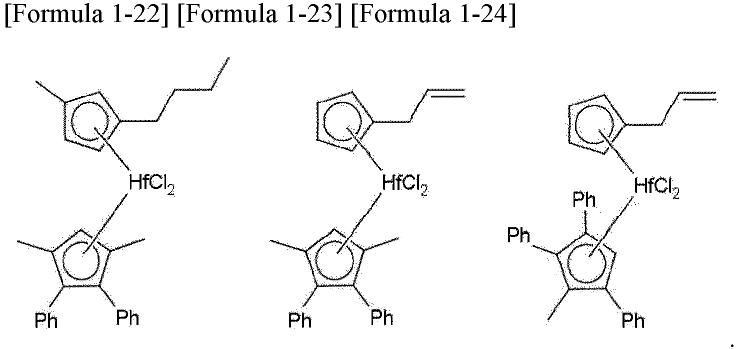

4. The process for preparing a transition metal compound of claim 1, wherein the compound represented by Formula 2 is at least one of the compounds represented by Formulae 2-1 to 2-6:

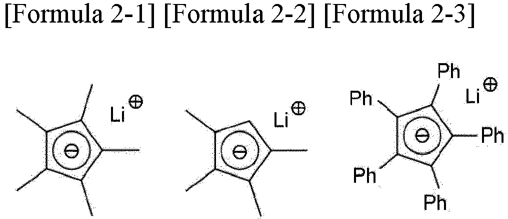

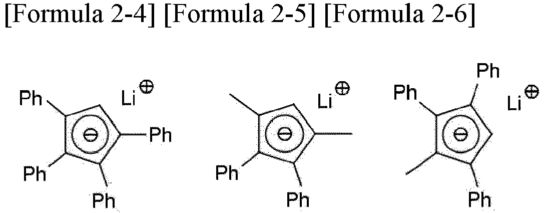

5. The process for preparing a transition metal compound of claim 1, wherein the compound represented by Formula 3 is at least one of the compounds represented by Formulae 3-1 to 3-9:

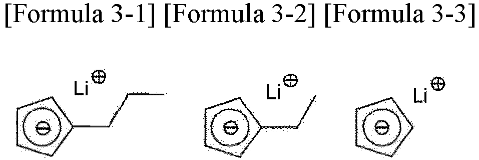

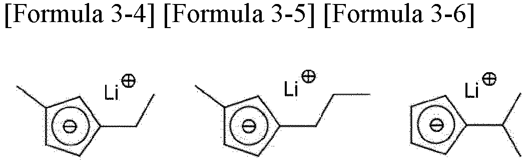

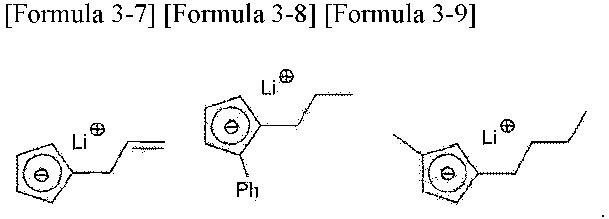

6. The process for preparing a transition metal compound of claim 1, wherein the solvent comprises at least one selected from the group consisting of hexane, pentane, toluene, benzene, dichloromethane, diethyl ether, tetrahydrofuran, acetone, and ethyl acetate.

7. The process for preparing a transition metal compound of claim 1, wherein the compound represented by Formula 4 is ZrCl₄ or HfCl₄.

8. The process for preparing a transition metal compound of claim 1, wherein, in step (2), the reaction temperature is -30°C to 120°C, and the reaction time is 1 to 24 hours.

9. The process for preparing a transition metal compound of claim 1, wherein, in step (3), the reaction temperature is -30°C to 80°C, and the reaction time is 1 to 24 hours.

10. The process for preparing a transition metal compound of claim 1, wherein the compound represented by Formula 2 is used in step (1), and the compound represented by Formula 3 is used in step (3).

11. The process for preparing a transition metal compound of claim 1, wherein the molar ratio of the compound represented by Formula 2 to the compound represented by Formula 3 is in the range of 10:1 to 1:10.

12. The process for preparing a transition metal compound of claim 1, which further comprises (4) removing unreacted substances and/or impurities from the reaction mixture obtained in step (3) with a filter.
